# EUROPÄISCHE PATENTSCHRIFT

(11) **EP 2 092 215 B1**
(45) Veröffentlichungstag und Bekanntmachung des Hinweises auf die Patenterteilung: **22.06.2011**
(21) Anmeldenummer: 07857276.5
(22) Anmeldetag: 06.12.2007
(51) Int. Cl.: F16H 3/66

(54) **MEHRSTUFENGETRIEBE**
MULTI-STAGE GEARBOX
TRANSMISSION À PLUSIEURS RAPPORTS

(30) Priorität: 19.12.2006 DE 102006059912
(43) Veröffentlichungstag der Anmeldung: 26.08.2009
(73) Patentinhaber: ZF Friedrichshafen AG, 88038 Friedrichshafen (DE)
(72) Erfinder: BOSS, Ralf, 88079 Kressbronn (DE); GUMPOLTSBERGER, Gerhard, 88045 Friedrichshafen (DE); FREUDENREICH, Hans-Peter, 89608 Griesingen (DE)
(86) Internationale Anmeldenummer: PCT/EP2007/063443
(87) Internationale Veröffentlichungsnummer: WO 2008/074646

(56) Entgegenhaltungen:
- US-A1- 2005 215 380
- US-A1- 2005 272 554
- US-A1- 2006 040 783

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Getriebe geht aus der EP 0 434 525 A1 hervor. Es umfasst im Wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im Wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlamellenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Aus der DE 199 12 480 A1 ist ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Des weiteren ist aus der DE 102 13 820 A1 ein Mehrgangautomatikgetriebe bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element R3 gekoppelt ist.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens sieben Vorwärtsgänge ohne Gruppenschaltung schaltbar sind. Der Vorschaltsatz wird aus einem Vorschalt-Planetenradsatz oder maximal zwei nicht schaltbaren, mit dem ersten Vorschalt-Planetenradsatz gekoppelten Vorschalt-Planetenradsätzen gebildet, wobei der Nachschaltsatz als Zweisteg-Vierwellen-Getriebe mit zwei schaltbaren Nachschalt-Planetenradsätzen ausgebildet ist und vier freie Wellen aufweist. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement D' und die erste freie Welle zusätzlich mit einem siebten Schaltelement zu verbinden.

Ferner ist im Rahmen der DE 101 15 987 der Anmelderin ein Mehrstufengetriebe mit mindestens sieben Gängen beschrieben. Dieses Getriebe besteht neben der Antriebswelle und der Abtriebswelle aus einem nicht schaltbaren Vorschaltradsatz und einem schaltbaren Nachschaltradsatz in Form eines Zweisteg-Vierwellen-Getriebes. Der Vorschaltradsatz besteht aus einem ersten Planetenradsatz, welcher neben der Eingangsdrehzahl der Antriebswelle eine zweite Drehzahl anbietet, die wahlweise auf einen Nachschaltradsatz geschaltet werden kann. Der Nachschaltradsatz besteht aus zwei schaltbaren Planetenradsätzen, welche mit den sechs Schaltelementen mindestens sieben Gänge schalten kann, wobei zwei Leistungswege gebildet werden. Dabei werden bei jedem Schaltvorgang in vorteilhafter Weise stets Gruppenschaltungen vermieden. Ein 9-Gang-Mehrstufengetriebe ist ferner aus der DE 29 36 969 bekannt; es umfasst acht Schaltelemente und vier Radsätze.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Bisherige Planetengetriebe weisen in der Regel nur einen Rückwärtsgang auf, wobei auch Planetengetriebe bekannt sind, die zusätzliche Rückwärtsgänge aufweisen, die entweder mit den vorhandenen Schaltelementen im Planetengetriebe schaltbar sind oder mittels eines zusätzlichen Wendesatzes realisiert werden. Nachteilig bei den bekannten Planetengetrieben ist demnach entweder die nicht ausreichende Anzahl und ungenügende Übersetzung der Rückwärtsgänge oder der zur Realisierung der Rückwärtsgänge erforderliche Bauaufwand.

Die gattungsmäßige US 2005/215380 A1 beschreibt ein Mehrstufengetriebe in Planetenbauweise mit drei Planetensätzen. Neben einem Antrieb und einem Abtrieb in einem Gehäuse umfasst das Mehrstufengetriebe mindestens sechs drehbare Wellen, sowie Schaltelemente in Form von drei Bremsen und vier Kupplungen, deren selektives Eingreifen verschiedene Übersetzungsverhältnisse zwischen dem Antrieb und dem Abtrieb bewirkt, sodass acht Vorwärtsgänge und drei Rückwärtsgänge realisierbar sind.

Ausgehend von dem in der letztgenannten Schrift beschriebenen Getriebe, liegt der vorliegenden Erfindung die Aufgabe zugrunde, ein Mehrstufengetriebe der eingangs genannten Art vorzuschlagen, welches mindestens sechs Vorwärtsgänge und mindestens drei Rückwärtsgänge mit ausreichender Übersetzung aufweist, bei dem der Bauaufwand und die Baugröße bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken, sowie die Drehzahlen der Wellen, Schaltelemente und Planetensätze möglicht gering gehalten werden. Insbesondere soll das erfindungsgemäße Getriebe zum Einbau in Nutzfahrzeugen und Arbeitsmaschinen geeignet sein, um sowohl eine ausreichende Vorwärtsgangzugkraft und - geschwindigkeit, als auch eine ausreichende Rückwärtsgangzugkraft und - geschwindigkeit zu ermöglichen.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des weiteren sind zumindest drei Planetensätze, im Folgenden als erster, zweiter und dritter Planetensatz bezeichnet, mindestens sechs drehbare Wellen - im Folgenden als erste, zweite, dritte, vierte, fünfte und sechste Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise sechs oder sieben Vorwärtsgänge und drei Rückwärtsgänge realisierbar sind.

Erfindungsgemäß ist bei dem Mehrstufengetriebe vorgesehen, dass die erste Welle ständig mit dem Antrieb und dem Sonnenrad des zweiten Planetensatzes verbunden ist, wobei die zweite Welle ständig mit dem Abtrieb und dem Hohlrad des dritten Planetensatzes verbunden ist, die dritte Welle ständig mit dem Hohlrad des zweiten Planetensatzes verbunden ist und wobei die vierte Welle ständig mit dem Steg des dritten Planetensatzes verbunden ist. Des weiteren ist die fünfte Welle ständig mit dem Hohlrad des ersten Planetensatzes, dem Steg des zweiten Planetensatzes und dem Sonnenrad des dritten Planetensatzes verbunden, wobei die sechste Welle ständig mit dem Steg des ersten Planetensatzes verbunden ist. Gemäß der Erfindung ist das Sonnenrad des ersten Planetensatzes über eine weitere Welle drehfest mit einem Gehäuse des Getriebes verbunden.

Hierbei sind die dritte und die vierte Welle jeweils über eine Bremse an ein Gehäuse des Getriebes ankoppelbar. Des weiteren ist vorgesehen, dass eine Kupplung die erste Welle mit der vierten Welle lösbar verbindet, dass eine weitere Kupplung die dritte Welle mit der sechsten Welle lösbar verbindet, dass eine weitere Kupplung die vierte Welle mit der sechsten Welle lösbar verbindet und dass durch Betätigung einer weiteren Kupplung, welche beispielsweise die dritte Welle mit der fünften Welle lösbar verbindet, der zweite Planetensatz verblockt wird.

Durch die erfindungsgemäße Ausgestaltung des Mehrstufengetriebes ergeben sich insbesondere für Nutzfahrzeuge und Arbeitsmaschinen geeignete Übersetzungen. Darüber hinaus wird mit dem erfindungsgemäßen Mehrstufengetriebe durch eine geringe Anzahl an Schaltelementen, vorzugsweise zwei Bremsen und vier Kupplungen, der Bauaufwand erheblich reduziert. In vorteilhafter Weise ist es mit dem erfindungsgemäßen Mehrstufengetriebe möglich, ein Anfahren mit einem hydrodynamischen Wandler, einer hydrodynamischen Kupplung, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im ersten Rückwärtsgang betätigt wird.

Ferner ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der Zeichnungen beispielhaft näher erläutert.
In diesen stellen dar:
- Figur 1: eine schematische Ansicht einer bevorzugten Ausführungs- form eines erfindungsgemäßen Mehrstufengetriebes;
- Figur 2: ein beispielhaftes Schaltschema für das erfindungsgemäße Mehrstufengetriebe gemäß Figur 1 und
- Figur 3: ein weiteres beispielhaftes Schaltschema für das erfin- dungsgemäße Mehrstufengetriebe gemäß Figur 1.

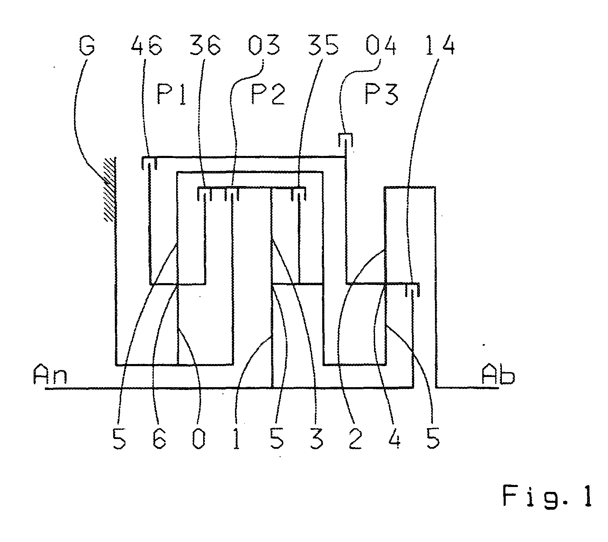

In Figur 1 ist ein erfindungsgemäßes Mehrstufengetriebe mit einer Antriebswelle An und einer Abtriebswelle Ab dargestellt, welche in einem Gehäuse G angeordnet sind. Es sind drei Planetensätze P1, P2, P3 vorgesehen, welche vorzugsweise als Minus-Planetensätze ausgebildet sind und in der Reihenfolge P1, P2, P3 in axialer Richtung angeordnet sind.

Wie aus Figur 1 ersichtlich, sind lediglich sechs Schaltelemente, nämlich zwei Bremsen 03, 04 und vier Kupplungen 14, 35, 36 und 46 vorgesehen. Mit diesen Schaltelementen ist ein selektives Schalten von vorzugsweise sechs oder sieben Vorwärtsgängen und drei Rückwärtsgängen realisierbar. Das erfindungsgemäße Mehrstufengetriebe weist insgesamt sechs drehbare Wellen auf, nämlich die Wellen 1, 2, 3, 4, 5 und 6.

Erfindungsgemäß ist bei dem Mehrstufengetriebe gemäß Figur 1 vorgesehen, dass die Welle 1 ständig mit dem Antrieb An und dem Sonnenrad des zweiten Planetensatzes P2 verbunden ist, wobei die Welle 2 ständig mit dem Abtrieb Ab und dem Hohlrad des dritten Planetensatzes P3 verbunden ist, die Welle 3 ständig mit dem Hohlrad des zweiten Planetensatzes P2 verbunden ist und wobei die Welle 4 ständig mit dem Steg des dritten Planetensatzes P3 verbunden ist. Des weiteren ist die Welle 5 ständig mit dem Hohlrad des ersten Planetensatzes P1, dem Steg des zweiten Planetensatzes P2 und dem Sonnenrad des dritten Planetensatzes P3 verbunden, wobei die Welle 6 ständig mit dem Steg des ersten Planetensatzes P1 verbunden ist. Wie in Figur 1 gezeigt, ist das Sonnenrad des ersten Planetensatzes P1 über die Welle 0 drehfest mit einem Gehäuse G des Getriebes verbunden.

Wie aus Figur 1 ersichtlich, ist die Welle 3 über die Bremse 03 an ein Gehäuse G des Getriebes ankoppelbar, wobei die Welle 4 über die Bremse 04 ebenfalls an ein Gehäuse G des Getriebes ankoppelbar ist. Des weiteren ist erfindungsgemäß vorgesehen, dass die Kupplung 35 die Welle 3 mit der Welle 5 lösbar verbindet, dass die Kupplung 14 die Welle 1 mit der Welle 4 lösbar verbindet, dass die Kupplung 36 die Welle 3 mit der Welle 6 lösbar verbindet und dass die Kupplung 46 die Welle 4 mit der Welle 6 lösbar verbindet.

Bei dem gezeigtren Ausführungsbeispiel ist der Außenlamellenträger der Kupplung 46 (für den Fall dass diese als Lamellenkupplung ausgebildet ist) radial betrachtet oberhalb der Schaltelemente 36, 03 und 35 geführt.

Die räumliche Anordnung der Schaltelemente kann beliebig sein und wird nur durch die Abmessungen und die äußere Formgebung begrenzt, so dass die tatsächliche Anordnung der Elemente je nach konstruktiver Anforderung von der gezeigten Anordnung deutlich abweichen kann.

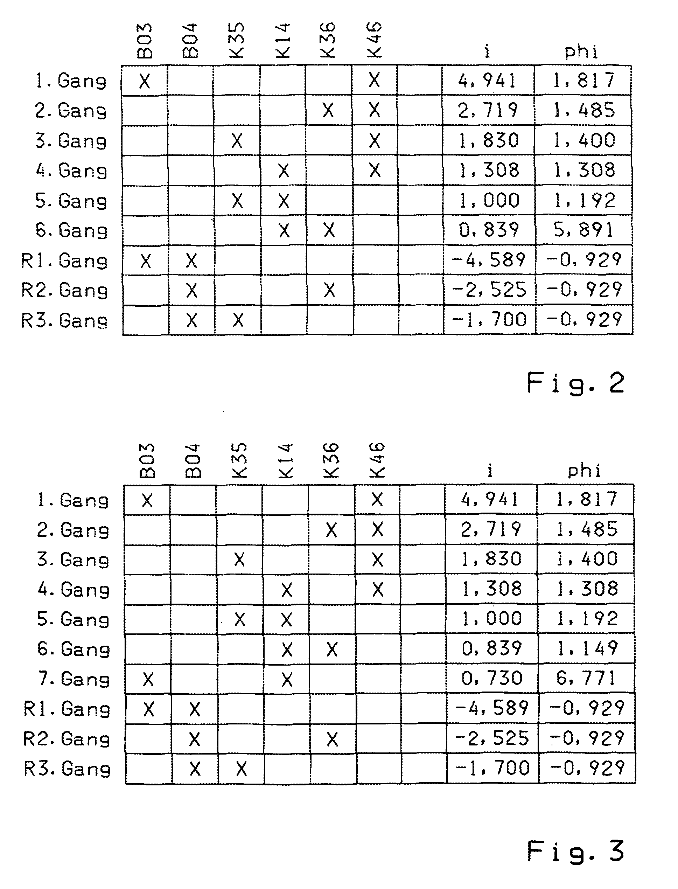

In Figur 2 ist ein beispielhaftes Schaltschema des erfindungsgemäßen Mehrstufengetriebes gemäß Figur 1 dargestellt, wobei sechs Vorwärtsgänge und drei Rückwärtsgänge realisierbar sind. Für jeden Gang werden zwei Schaltelemente geschlossen. Dem Schaltschema können die jeweiligen Übersetzungen i der einzelnen Gangstufen und die daraus zu bestimmenden Stufensprünge phi beispielhaft entnommen werden. Des weiteren kann dem Schaltschema entnommen werden, dass bei sequentieller Schaltweise Doppelschaltungen bzw. Gruppenschaltungen vermieden werden, da zwei benachbarte Gangstufen ein Schaltelement gemeinsam benutzen. Bei dem gezeigten Schaltschema ist der fünfte Gang als Direktgang ausgebildet.

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Der erste Vorwärtsgang ergibt sich durch Schließen der Bremse 03 und der Kupplung 46, der zweite Gang durch Schließen der Kupplung 36 und der Kupplung 46 und der dritte Gang ergibt sich durch Schließen der Kupplung 35 und der Kupplung 46. Ferner ergibt sich der vierte Gang durch Schließen der Kupplungen 14 und 46, der fünfte Gang durch Schließen der Kupplung 35 und der Kupplung 14 und der sechste Gang ergibt sich durch Schließen der Kupplung 14 und der Kupplung 36. Wie aus dem Schaltschema ersichtlich, ergibt sich der erste Rückwärtsgang durch Schließen der Bremse 03 und der Bremse 04, der zweite Rückwärtsgang durch Schließen der Bremse 04 und der Kupplung 36 und der dritte Rückwärtsgang ergibt sich durch Schließen der Bremse 04 und der Kupplung 35.

Gemäß der Erfindung kann ein zusätzlicher Vorwärtsgang, nämlich ein siebter Vorwärtsgang realisiert werden, wobei dies durch Schließen der Bremse 03 und der Kupplung 14 erfolgt, wie anhand des Schaltschemas nach Figur 3 veranschaulicht.

Im Rahmen einer weiteren Ausführungsform der Erfindung wird vorgeschlagen, die Kupplung 35, welche die Wellen 3 und 5 lösbar miteinander verbindet durch eine Kupplung zu ersetzen, welche die Wellen 1 und 3 lösbar miteinander verbindet. Alternativ dazu kann die Kupplung 35 durch eine Kupplung ersetzt werden, welche die Wellen 1 und 5 lösbar miteinander verbindet. Durch die letztgenannten Kupplungen wird der gleiche Effekt erzielt, nämlich das Verblocken des zweiten Planetensatzes P2.

Es ist erfindungsgemäß möglich, an jeder geeigneten Stelle des Mehrstufengetriebes zusätzliche Freiläufe vorzusehen, beispielsweise zwischen einer Welle und einem Gehäuse des Getriebes oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle oder der Abtriebswelle, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle oder der Abtriebswelle, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden. Gemäß der Erfindung können die Schaltelemente hydraulisch, pneumatisch oder elektromotorisch betätigbar sein.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 0: Welle
- 1: Welle
- 2: Welle
- 3: Welle
- 4: Welle
- 5: Welle
- 6: Welle
- 03: Bremse
- 04: Bremse
- 14: Kupplung
- 35: Kupplung
- 36: Kupplung
- 46: Kupplung

- P1: Planetensatz
- P2: Planetensatz
- P3: Planetensatz
- An: Antrieb
- Ab: Abtrieb
- i: Übersetzung
- phi: Stufensprung
- G: Gehäuse

## Patentansprüche

1. Mehrstufengetriebe in Planetenbauweise, insbesondere Automatgetriebe für ein Kraftfahrzeug, umfassend einen Antrieb (An) und einen Abtrieb (Ab), welche in einem Gehäuse (G) angeordnet sind, drei Planetensätze (P1, P2, P3), mindestens sechs drehbare Wellen (1, 2, 3, 4, 5, 6) sowie mindestens sechs Schaltelemente (03, 04, 14, 35, 36, 46), umfassend Bremsen (03, 04) und Kupplungen (14, 35, 36, 46), deren selektives Eingreifen verschiedene Übersetzungsverhältnisse zwischen dem Antrieb (An) und dem Abtrieb (Ab) bewirkt, so dass sechs oder sieben Vorwärtsgänge und drei Rückwärtsgänge realisierbar sind, wobei eine erste Welle (1) ständig mit dem Antrieb (An) und dem Sonnenrad des zweiten Planetensatzes (P2) verbunden ist, eine zweite Welle (2) ständig mit dem Abtrieb (Ab) und dem Hohlrad des dritten Planetensatzes (P3) verbunden ist, eine dritte Welle (3) ständig mit dem Hohlrad des zweiten Planetensatzes (P2) verbunden ist, eine vierte Welle (4) ständig mit dem Steg des dritten Planetensatzes (P3) verbunden ist, eine fünfte Welle (5) ständig mit dem Hohlrad des ersten Planetensatzes (P1), dem Steg des zweiten Planetensatzes (P2) und dem Sonnenrad des dritten Planetensatzes (P3) verbunden ist, eine sechste Welle (6) ständig mit dem Steg des ersten Planetensatzes (P1) verbunden ist, wobei die dritte Welle (3) über eine erste Bremse (03) an dem Gehäuse (G) des Getriebes ankoppelbar ist, und wobei eine erste Kupplung (14) die erste Welle (1) mit der vierten Welle (4) lösbar verbindet, eine zweite Kupplung (36) die dritte Welle (3) mit der sechsten Welle (6) lösbar verbindet, eine dritte Kupplung (46) die vierte Welle (4) mit der sechsten Welle (6) lösbar verbindet, **dadurch gekennzeichnet, dass** das Sonnenrad des ersten Planetensatzes (P1) drehfest mit dem Gehäuse (G) des Getriebes verbunden ist, dass die vierte Welle (4) über eine zweite Bremse (04) an dem Gehäuse des Getriebes ankoppelbar ist, und dass eine vierte Kupplung (35) vorgesehen ist, über die die dritte Welle (3) mit der fünften Welle (5), die erste Welle (1) mit der dritten Welle (3) oder die erste Welle (1) mit der fünften Welle (5) lösbar verbindbar ist.

2. Mehrstufengetriebe nach Anspruch 1, **dadurch gekennzeichnet, dass** der erste, der zweite und der dritte Planetensatz (P1, P2, P3) in dieser Reihenfolge (P1, P2, P3) in axialer Richtung angeordnet sind.

3. Mehrstufengetriebe nach einem der vorangehenden Ansprüche, **dadurch gekennzeichnet, dass** die Planetensätze (P1, P2, P3) als Minus-Planetensätze ausgebildet sind.

4. Mehrstufengetriebe nach einem der vorangehenden Ansprüche, **dadurch gekennzeichnet, dass** für den Fall, dass die dritte Kupplung (46) als Lamellenkupplung ausgebildet ist, deren Außenlamellenträger radial betrachtet oberhalb eines ersten, zweiten und dritten Schaltelementes (36), (03) und (35) geführt ist.

5. Mehrstufengetriebe nach einem der vorangehenden Ansprüche, **dadurch gekennzeichnet, dass** sechs Vorwärtsgänge realisierbar sind, wobei sich der erste Gang durch Schließen der ersten Bremse (03) und der dritten Kupplung (46), der zweite Gang durch Schließen der zweiten Kupplung (36) und der dritten Kupplung (46), der dritte Gang durch Schließen der vierten Kupplung (35) und der dritten Kupplung (46), der vierte Gang durch Schließen der ersten Kupplung (14) und der dritten Kupplung (46), der fünfte Gang durch Schließen der vierten Kupplung (35) und der ersten Kupplung (14) und der sechste Gang durch Schließen der ersten Kupplung (14) und der zweiten Kupplung (36) ergibt.

6. Mehrstufengetriebe nach Anspruch 5, **dadurch gekennzeichnet, dass** ein siebter Vorwärtsgang realisierbar ist, der sich durch Schließen der ersten Bremse (03) und der ersten Kupplung (14) ergibt.

7. Mehrstufengetriebe nach einem der vorangehenden Ansprüche, **dadurch gekennzeichnet, dass** drei Rückwärtsgänge realisierbar sind, wobei sich der erste Rückwärtsgang durch Schließen der ersten Bremse (03) und der zweiten Bremse (04), der zweite Rückwärtsgang durch Schließen der zweiten Bremse (04) und der zweiten Kupplung (36) und der dritte Rückwärtsgang durch Schließen der zweiten Bremse (04) und der vierten Kupplung (35) ergibt.

8. Mehrstufengetriebe nach einem der vorangehenden Ansprüche, **dadurch gekennzeichnet, dass** auf jeder Welle (1, 2, 3, 4, 5, 6) ein Freilauf zum Gehäuse (G) oder zu einer anderen Welle (1, 2, 3, 4, 5, 6) anordbar ist.

9. Mehrstufengetriebe nach einem der vorangehenden Ansprüche, **dadurch gekennzeichnet, dass** Antrieb und Abtrieb auf der gleichen Seite des Gehäuses vorgesehen sind.

10. Mehrstufengetriebe nach einem der vorangehenden Ansprüche, **dadurch gekennzeichnet, dass** ein Achs- und/oder ein Verteilerdifferential auf der Antriebsseite oder der Abtriebsseite angeordnet ist.

11. Mehrstufengetriebe nach einem der vorangehenden Ansprüche, **dadurch gekennzeichnet, dass** der Antrieb (An) durch ein Kupplungselement von einem Antriebs-Motor trennbar ist.

12. Mehrstufengetriebe nach Anspruch 11, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

13. Mehrstufengetriebe nach einem der vorangehenden Ansprüche, **dadurch gekennzeichnet, dass** in Kraftflussrichtung hinter dem Getriebe ein externes Anfahrelement, insbesondere nach Anspruch 11 oder 12, anordbar ist, wobei der Antrieb (An) fest mit der Kurbelwelle des Motors verbunden ist.

14. Mehrstufengetriebe nach einem der vorangehenden Ansprüche, **dadurch gekennzeichnet, dass** das Anfahren mittels eines Schaltelements (03) des Getriebes erfolgt, wobei der Antrieb (An) ständig mit der Kurbelwelle des Motors verbunden ist.

15. Mehrstufengetriebe nach einem der vorangehenden Ansprüche, **dadurch gekennzeichnet, dass** zwischen Motor und Getriebe ein Torsionsschwingungsdämpfer anordbar ist.

16. Mehrstufengetriebe nach einem der vorangehenden Ansprüche, **dadurch gekennzeichnet, dass** auf jeder Welle (1, 2, 3, 4, 5, 6) eine verschleißfreie Bremse anordbar ist.

17. Mehrstufengetriebe nach einem der vorangehenden Ansprüche, **dadurch gekennzeichnet, dass** zum Antrieb von zusätzlichen Aggregaten auf jeder Welle (1, 2, 3, 4, 5, 6) ein Nebenabtrieb anordbar ist.

18. Mehrstufengetriebe nach einem der vorangehenden Ansprüche, **dadurch gekennzeichnet, dass** die Schaltelemente als lastschaltende Kupplungen oder Bremsen ausgebildet sind.

19. Mehrstufengetriebe nach Anspruch 18, **dadurch gekennzeichnet, dass** Lamellenkupplungen, Bandbremsen und/oder Konuskupplungen einsetzbar sind.

20. Mehrstufengetriebe nach einem der Ansprüche 1 bis 17, **dadurch gekennzeichnet, dass** als Schaltelemente formschlüssige Bremsen und/oder Kupplungen vorgesehen sind.

21. Mehrstufengetriebe nach einem der vorangehenden Ansprüche, **dadurch gekennzeichnet, dass** auf jeder Welle (1, 2, 3, 4, 5, 6) als Generator und/oder als zusätzliche Antriebsmaschine eine elektrische Maschine anbringbar ist.

## Claims

1. Multi-stage gearbox of planetary design, in particular automatic gearbox for a motor vehicle, comprising a drive input (An) and a drive output (Ab) which are arranged in a housing (G), three planet sets (P1, P2, P3), at least six rotatable shafts (1, 2, 3, 4, 5, 6) and at least six shift elements (03, 04, 14, 35, 36, 46), comprising brakes (03, 04) and clutches (14, 35, 36, 46), the selective engagement of which generates different transmission ratios between the drive input (An) and the drive output (Ab), such that six or seven forward gears and three reverse gears can be realized, a first shaft (1) being permanently connected to the drive input (An) and to the sun gear of the second planet set (P2), a second shaft (2) being permanently connected to the drive output (Ab) and to the internal gear of the third planet set (P3), a third shaft (3) being permanently connected to the internal gear of the second planet set (P2), a fourth shaft (4) being permanently connected to the web of the third planet set (P3), a fifth shaft (5) being permanently connected to the internal gear of the first planet set (P1), to the web of the second planet set (P2) and to the sun gear of the third planet set (P3), a sixth shaft (6) being permanently connected to the web of the first planet set (P1), it being possible for the third shaft (3) to be coupled by means of a first brake (03) to the housing (G) of the gearbox, and a first clutch (14) detachably connecting the first shaft (1) to the fourth shaft (4), a second clutch (36) detachably connecting the third shaft (3) to the sixth shaft (6), a third clutch (46) detachably connecting the fourth shaft (4) to the sixth shaft (6), **characterized in that** the sun gear of the first planet set (P1) is rotationally fixedly connected to the housing (G) of the gearbox, **in that** the fourth shaft (4) can be coupled to the housing of the gearbox by means of a second brake (04), and **in that** a fourth clutch (35) is provided by means of which the third shaft (3) can be detachably connected to the fifth shaft (5), the first shaft (1) can be detachably connected to the third shaft (3) or the first shaft (1) can be detachably connected to the fifth shaft (5).

2. Multi-stage gearbox according to Claim 1, **characterized in that** the first, the second and the third planet set (P1, P2, P3) are arranged **in that** sequence (P1, P2, P3) in the axial direction.

3. Multi-stage gearbox according to one of the preceding claims, **characterized in that** the planet sets (P1, P2, P3) are designed as minus planet sets.

4. Multi-stage gearbox according to one of the preceding claims, **characterized in that**, if the third clutch (46) is designed as a multiplate clutch, the outer lamella carrier thereof is guided radially above a first, second and third shift element (36), (03) and (35).

5. Multi-stage gearbox according to one of the preceding claims, **characterized in that** six forward gears can be realized, the first gear being formed by closing the first brake (03) and the third clutch (46), the second gear being formed by closing the second clutch (36) and the third clutch (46), the third gear being formed by closing the fourth clutch (35) and the third clutch (46), the fourth gear being formed by closing the first clutch (14) and the third clutch (46), the fifth gear being formed by closing the fourth clutch (35) and the first clutch (14), and the sixth gear being formed by closing the first clutch (14) and the second clutch (36).

6. Multi-stage gearbox according to Claim 5, **characterized in that** a seventh forward gear can be realized which is formed by closing the first brake (03) and the first clutch (14).

7. Multi-stage gearbox according to one of the preceding claims, **characterized in that** three reverse gears can be realized, the first reverse gear being formed by closing the first brake (03) and the second brake (04), the second reverse gear being realized by closing the second brake (04) and the second clutch (36), and the third reverse gear being formed by closing the second brake (04) and the fourth clutch (35).

8. Multi-stage gearbox according to one of the preceding claims, **characterized in that** on each shaft (1, 2, 3, 4, 5, 6) there can be arranged a freewheel to the housing (G) or to another shaft (1, 2, 3, 4, 5, 6).

9. Multi-stage gearbox according to one of the preceding claims, **characterized in that** the drive input and drive output are provided on the same side of the housing.

10. Multi-stage gearbox according to one of the preceding claims, **characterized in that** an axle differential and/or a power divider differential is arranged on the drive input side or on the drive output side.

11. Multi-stage gearbox according to one of the preceding claims, **characterized in that** the drive input (An) can be separated from a drive engine by a clutch element.

12. Multi-stage gearbox according to Claim 11, **characterized in that** a hydrodynamic torque converter, a hydraulic clutch, a dry-running starting clutch, a wet-running starting clutch, a magnetic-powder clutch or a centrifugal clutch is provided as a clutch element.

13. Multi-stage gearbox according to one of the preceding claims, **characterized in that** an external starting element, in particular according to Claim 11 or 12, can be arranged downstream of the gearbox in the power flow direction, the drive input (An) being fixedly connected to the crankshaft of the engine.

14. Multi-stage gearbox according to one of the preceding claims, **characterized in that** starting takes place by means of a shift element (03) of the gearbox, the drive input (An) being permanently connected to the crankshaft of the engine.

15. Multi-stage gearbox according to one of the preceding claims, **characterized in that** a torsional vibration damper can be arranged between the engine and gearbox.

16. Multi-stage gearbox according to one of the preceding claims, **characterized in that** a wear-free brake can be arranged on each shaft (1, 2, 3, 4, 5, 6).

17. Multi-stage gearbox according to one of the preceding claims, **characterized in that** an auxiliary drive output can be arranged on each shaft (1, 2, 3, 4, 5, 6) for the purpose of driving additional assemblies.

18. Multi-stage gearbox according to one of the preceding claims, **characterized in that** the shift elements are designed as clutches or brakes that can be shifted under load.

19. Multi-stage gearbox according to Claim 18, **characterized in that** multi-plate clutches, band brakes and/or conical clutches can be used.

20. Multi-stage gearbox according to one of Claims 1 to 17, **characterized in that** positively locking brakes and/or clutches are provided as shift elements.

21. Multi-stage gearbox according to one of the preceding claims, **characterized in that** an electric machine can be attached, as a generator and/or as an additional drive machine, to each shaft (1, 2, 3, 4, 5, 6).

## Revendications

1. Transmission à rapports multiples de construction planétaire, en particulier transmission automatique pour un véhicule automobile, comprenant un entraînement (An) et une prise de force (Ab), qui sont disposés dans un boîtier (G), trois trains planétaires (P1, P2, P3), au moins six arbres rotatifs (1, 2, 3, 4, 5, 6) ainsi qu'au moins six éléments de changement de vitesse (03, 04, 14, 35, 36, 46), comprenant des freins (03, 04) et des embrayages (14, 35, 36, 46) dont l'engagement sélectif provoque différents rapports de multiplication entre l'entraînement (An) et la prise de force (Ab), de sorte que six ou sept vitesses de marche avant et trois vitesses de marche arrière puissent être réalisées, un premier arbre (1) étant connecté de manière permanente à l'entraînement (An) et à la roue solaire du deuxième train planétaire (P2), un deuxième arbre (2) étant connecté de manière permanente à la prise de force (Ab) et à la couronne du troisième train planétaire (P3), un troisième arbre (3) étant connecté de manière permanente à la couronne du deuxième train planétaire (P2), un quatrième arbre (4) étant connecté de manière permanente au porte-satellites du troisième train planétaire (P3), un cinquième arbre (5) étant connecté de manière permanente à la couronne du premier train planétaire (P1), au porte-satellites du deuxième train planétaire (P2) et à la roue solaire du troisième train planétaire (P3), un sixième arbre (6) étant connecté de manière permanente au porte-satellites du premier train planétaire (P1), le troisième arbre (3) pouvant être accouplé par le biais d'un premier frein (03) au boîtier (G) de la transmission, et un premier embrayage (14) reliant le premier arbre (1) au quatrième arbre (4) de manière amovible, un deuxième embrayage (36) reliant le troisième arbre (3) au sixième arbre (6) de manière amovible, un troisième embrayage (46) reliant le quatrième arbre (4) au sixième arbre (6), **caractérisée en ce que** la roue solaire du premier train planétaire (P1) est connectée de manière solidaire en rotation au boîtier (G) de la transmission, **en ce que** le quatrième arbre (4) peut être accouplé par le biais d'un deuxième frein (04) au boîtier de la transmission, et **en ce qu'**un quatrième embrayage (35) est prévu, par le biais duquel le troisième arbre (3) peut être connecté de manière amovible au cinquième arbre (5), le premier arbre (1) au troisième arbre (3) ou le premier arbre (1) au cinquième arbre (5).

2. Transmission à rapports multiples selon la revendication 1, **caractérisée en ce que** le premier, le deuxième et le troisième train planétaire (P1, P2, P3) sont disposés dans cet ordre (P1, P2, P3) dans la direction axiale.

3. Transmission à rapports multiples selon l'une quelconque des revendications précédentes, **caractérisée en ce que** les trains planétaires (P1, P2, P3) sont réalisés sous forme de trains planétaires négatifs.

4. Transmission à rapports multiples selon l'une quelconque des revendications précédentes, **caractérisée en ce que**, dans le cas où le troisième embrayage (46) est réalisé sous forme d'embrayage à disques, son support de disques extérieur, vu radialement, est guidé au-dessus d'un premier, deuxième et troisième élément de changement de vitesse (36), (03) et (35).

5. Transmission à rapports multiples selon l'une quelconque des revendications précédentes, **caractérisée en ce que** six vitesses de marche avant peuvent être réalisées, la première vitesse étant obtenue par fermeture du premier frein (03) et du troisième embrayage (46), la deuxième vitesse étant obtenue par fermeture du deuxième embrayage (36) et du troisième embrayage (46), la troisième vitesse étant obtenue par fermeture du quatrième embrayage (35) et du troisième embrayage (46), la quatrième vitesse étant obtenue par fermeture du premier embrayage (14) et du troisième embrayage (46), la cinquième vitesse étant obtenue par fermeture du quatrième embrayage (35) et du premier embrayage (14) et la sixième vitesse étant obtenue par fermeture du premier embrayage (14) et du deuxième embrayage (36).

6. Transmission à rapports multiples selon la revendication 5, **caractérisée en ce qu'**une septième vitesse de marche avant peut être réalisée, laquelle est obtenue par fermeture du premier frein (03) et du premier embrayage (14).

7. Transmission à rapports multiples selon l'une quelconque des revendications précédentes, **caractérisée en ce que** trois vitesses de marche arrière peuvent être réalisées, la première vitesse de marche arrière étant obtenue par fermeture du premier frein (03) et du deuxième frein (04), la deuxième vitesse de marche arrière étant obtenue par fermeture du deuxième frein (04) et du deuxième embrayage (36) et la troisième vitesse de marche arrière étant obtenue par fermeture du deuxième frein (04) et du quatrième embrayage (35).

8. Transmission à rapports multiples selon l'une quelconque des revendications précédentes, **caractérisée en ce que** sur chaque arbre (1, 2, 3, 4, 5, 6) peut être disposée une roue libre par rapport au boîtier (G) ou à un autre arbre (1, 2, 3, 4, 5, 6).

9. Transmission à rapports multiples selon l'une quelconque des revendications précédentes, **caractérisée en ce que** l'entraînement et la prise de force sont prévus du même côté du boîtier.

10. Transmission à rapports multiples selon l'une quelconque des revendications précédentes, **caractérisée en ce qu'**un différentiel d'essieu et/ou intermédiaire est disposé sur le côté de l'entraînement ou le côté de la prise de force.

11. Transmission à rapports multiples selon l'une quelconque des revendications précédentes, **caractérisée en ce que** l'entraînement (An) peut être séparé d'un moteur d'entraînement par un élément d'embrayage.

12. Transmission à rapports multiples selon la revendication 11, **caractérisée en ce que** l'on prévoit comme élément d'embrayage un convertisseur hydrodynamique, un embrayage hydraulique, un embrayage de démarrage sec, un embrayage de démarrage humide, un embrayage à poudre magnétique ou un embrayage à force centrifuge.

13. Transmission à rapports multiples selon l'une quelconque des revendications précédentes, **caractérisée en ce que** l'on peut disposer dans la direction du flux de force derrière la transmission un élément de démarrage externe, notamment selon la revendication 11 ou 12, l'entraînement (An) étant connecté fixement au vilebrequin du moteur.

14. Transmission à rapports multiples selon l'une quelconque des revendications précédentes, **caractérisée en ce que** le démarrage a lieu au moyen d'un élément de changement de vitesse (03) de la transmission, l'entraînement (An) étant connecté de manière permanente au vilebrequin du moteur.

15. Transmission à rapports multiples selon l'une quelconque des revendications précédentes, **caractérisée en ce que** l'on peut disposer un amortisseur des vibrations de torsion entre le moteur et la transmission.

16. Transmission à rapports multiples selon l'une quelconque des revendications précédentes, **caractérisée en ce que** l'on peut disposer sur chaque arbre (1, 2, 3, 4, 5, 6) un frein sans usure.

17. Transmission à rapports multiples selon l'une quelconque des revendications précédentes, **caractérisée en ce que** pour l'entraînement d'équipements supplémentaires, on peut disposer sur chaque arbre (1, 2, 3, 4, 5, 6) une prise de force auxiliaire.

18. Transmission à rapports multiples selon l'une quelconque des revendications précédentes, **caractérisée en ce que** les éléments de changement de vitesse sont réalisés sous forme d'embrayages à commutation de charge ou sous forme de freins.

19. Transmission à rapports multiples selon la revendication 18, **caractérisée en ce que** l'on peut utiliser des embrayages à disques, des freins à bande et/ou des embrayages coniques.

20. Transmission à rapports multiples selon l'une quelconque des revendications 1 à 17, **caractérisée en ce que** l'on prévoit des freins et/ou des embrayages à engagement positif en tant qu'éléments de changement de vitesse.

21. Transmission à rapports multiples selon l'une quelconque des revendications précédentes, **caractérisée en ce que** l'on peut monter sur chaque arbre (1, 2, 3, 4, 5, 6) en tant que générateur et/ou en tant que machine d'entraînement supplémentaire une machine électrique.
